# EUROPÄISCHE PATENTSCHRIFT

(11) **EP 0 311 181 B1**
(45) Veröffentlichungstag und Bekanntmachung des Hinweises auf die Patenterteilung: **15.06.1994**
(21) Anmeldenummer: 88202123.1
(22) Anmeldetag: 29.09.1988
(51) Int. Cl.: H04Q 11/04

(54) **Schaltungsanordnung zur Sicherstellung der zeitrichtigen Kanalzuordnung in einem digitalen Nachrichtenübertragungssystem**
Circuit arrangement for guaranteeing in time the correct channel allocation in a digital message communication system
Circuit pour garantir l'allocation exacte en temps de canaux dans un système de commutation de messages numériques

(30) Priorität: 07.10.1987 DE 3733888
(43) Veröffentlichungstag der Anmeldung: 12.04.1989
(73) Patentinhaber: Philips Patentverwaltung GmbH, 22335 Hamburg (DE); Philips Electronics N.V., 5621 BA Eindhoven (NL)
(72) Erfinder: Keilholz, Heinz, D-8501 Heroldsberg (DE)
(74) Vertreter: Peuckert, Hermann, Dipl.-Ing.

(56) Entgegenhaltungen:
- EP-A- 0 229 378
- WO-A-83/02535
- DE-A- 3 311 257
- DE-A- 3 311 283
- DE-A- 3 311 284
- GB-A- 2 085 264
- IBM TECHNICAL DISCLOSURE BULLETIN. vol. 25, no. 11a, April 1983, NEW YORK US Seiten 5428 - 5434; B.L. Beukma: "Determination of System Configuration and I/O Adapter Design/ Feature level via Configuration Commands"

## Beschreibung

Die Erfindung betrifft eine Schaltungsanordnung zur Sicherstellung der zeitrichtigen Kanalzuordnung durch einen Kanalzuordner eines digitalen Nachrichtenübertragungssystems.

Aus der DE-OS 33 11 283 ist eine Schaltungsanordnung zum Verhindern der Abgabe von Störsignalen über wenigstens eine Zeitmuliplexleitung beim Stecken peripherer Steckbaugruppen einer digitalen Fernsprechvermittlungsanlage bekannt, bei der Schaltmittel vorgesehen sind, durch die die Freigabesignale, die die zeitkanalgerechte Aufschaltung der Baugruppen auf einer Zeitmultiplexleitung bewirken, solange unterdrückt werden, bis nach dem Anlegen der Versorgungsspannung beim Stecken eine bestimmte Zeitspanne verstrichen ist und die Versorgungsspannung außerdem einen bestimmten Schwellwert erreicht hat. Die Schaltmittel bestehen aus einem Zeitglied, vorzugsweise RC-Glied, das von der Versorgungsspannung beaufschlagt wird, sowie aus verschiedenen für die verschiedenen Freigabesignale vorgesehenen Verknüpfungsschaltungen. Die Verzögerungszeit ist dabei so bemessen, daß danach alle Takte und Freigabesignale funktionsrichtig eingeschwungen sind. Eine solche Schaltungsanordnung weist den Nachteil auf, daß während des Betriebes die abgegebenen Störsignale, die auf einen Taktausfall oder einen Bausteindefekt zurückzuführen sind, nicht von der Zeitmultiplexleitung ferngehalten werden können.

Eine Verbesserung der aus der DE-OS 33 11 283 bekannten Schaltungsanordnung ist in der DE-OS 33 11 284 beschrieben. Jede periphere Baugruppe weist hierbei eine retriggerbare monostabile Kippstufe auf, welche durch die Impulse eines Freigabesignales jeweils in ihren instabilen Zustand geschaltet wird, wobei die Verweilzeit einer solchen monostabilen Kippstufe geringfügig länger ist als die Impulsbreite des betreffenden Freigabesignales. Das bedeutet, daß die von den Freigabeimpulsen in den instabilen Zustand geschaltete retriggerbare monostabile Kippstufe ihren instabilen Zustand solange nicht verlassen wird, wie die Freigabeimpulse im vorgegebenen Abstand auftreten. Wenn infolge eines Fehlers das Freigabesignal als Dauersignal auftritt, wird die monostabile Kippstufe ihren stabilen Zustand erreichen, wodurch das Wirksamwerden des Freigabesignales verhindert wird.

Aus der DE-OS 33 11 257 ist eine weitere Schaltungsanordnung zum Verhindern der Abgabe von Störsignalen während des Betriebes der peripheren Baugruppen bekannt. Hierbei weist jede periphere Baugruppe wenigstens eine monostabile Kippstufe auf, die durch Rückführung der digitalen Ausgangsinformationen an den Rückstelleingang sich selbst steuert, so daß diese in genauer Entsprechung zum Wechsel in der Bitkombination der digitalen Ausgangsinformationen entweder ihren stabilen oder ihren instabilen Zustand annehmen kann. Hierdurch ist ein Umschalten in den instabilen Zustand nur bei Auftreten eines Freigabesignales möglich, mit dem die monostabile Kippstufe beaufschlagt wird. Die Verweilzeit der monostabilen Kippstufe ist geringfügig länger als die Dauer des Freigabesignales und der Ausgang der monostabilen Kippstufe steht über eine Torschaltung mit der Zeitmultiplexleitung in Verbindung. Durch diese Schaltungsanordnung wird die Abgabe von Störimpulsen auf die Zeitmultiplexleitung weitgehend verhindert.

Voraussetzung für die Wirkungsweise der aus dem oben genannten Stand der Technik bekannten Schaltungsanordnungen ist die Voraussetzung, daß im Störungsfall ein Dauerfreigabesignal auftritt. Dieser Sonderfall ist jedoch nicht in jeder zentralgesteuerten Fernsprechvermittlungsanlage gegeben, so daß die Verhinderung der Abgabe von Störsignalen durch periphere Steckbaugruppen nur in besonderen Fällen weitgehend vermieden werden kann.

Der Erfindung liegt die Aufgabe zugrunde, eine Schaltungsanordnung zur Sicherstellung der zeitrichtigen Kanalzuordnung durch einen Kanalzuordner eines digitalen Nachrichtenübertragungssystems derart anzugeben, daß beim Einschalten der Versorgungsspannung und im Fehlerfall der Kanalzuordner keine Steuerung der angeschlossenen Baugruppen vornimmt, d.h., sich nach außen hin neutral verhält.

Diese Aufgabe wird durch eine Schaltungsanordnung zur Sicherstellung der zeitrichtigen Abgabe von Sprachsignalen und Kennzeicheninformationen auf einen systeminternen Datenbus durch einen Kanalzuordner eines digitalen Nachrichten-Übertragungssystems, das periphere Kanaleinheiten zur getrennten Verarbeitung von Sprachsignalen und von Kennzeicheninformationen enthält, mit den folgenden Merkmalen gelöst:
Die Schaltungsanordnung enthält eine RC-Schaltung und einen Speicher, die nach dem Anlegen der Versorgungsspannung zur Lieferung eines Sperrsignals über eine bestimmte Verzögerungszeit vorgesehen sind und eine Synchronzustands-Überwachungsschaltung, die
- eine erste Ladungsimpulserzeugungsschaltung zur Ableitung von Ladeimpulsen aus einem von außen zugeführten Synchronisiersignal,
- einen ersten Zähler zur zyklischen Zählung, dessen Zählwert nach Empfang eines Ladeimpulses der dem Kanalzuordner zugeordneten Steckplatzcodierung entspricht,
- einen Vergleicher zur Erzeugung eines Ausgangsimpulses bei Nichtübereinstimmung eines Ladeimpulses mit einem von der zweiten Ladungsimpulserzeugungsschaltung erzeugten Impulses nach einem Lauf des ersten Zählers und
- einen zweiten Zähler enthält, der nach Empfang des Ausgangsimpulses zur Unterbindung der Abgabe eines Ladeimpulses an den ersten Zähler und der nach Zählung einer vorgegebenen Anzahl von vom ersten Zähler gelieferten Takten und bei Nichtlieferung des Sperrsignals zur Freigabe eines von der zweiten Ladungsimpulserzeugungsschaltung erzeugten, von der Steckplatzcodierung abhängigen Impulses vorgesehen ist.

Durch die RC-Schaltung und den Speicher wird erreicht, daß beim Anlegen der Versorgungsspannung vom Ausgang des Kanalzuordners kein Impuls abgegeben wird. Zusätzlich sorgt die Synchronzustands-Überwachungsschaltung dafür, das bei Störungen während des Betriebes kein Impuls vom Ausgang des Kanalzuordners weitergegeben wird. Tritt eine Störung auf, so stellt der Vergleicher fest, daß der von der ersten Ladungsimpulserzeugungsschaltung aus dem Synchronisiersignal abgeleitete Ladeimpuls und der aus aus dem Zählerstand des ersten Zählers von der zweiten Ladungsimpulserzeugungsschaltung abgeleitete Impuls nicht übereinstimmen. Dann erfolgt durch den Kanalzuordner kein Zugriff auf den internen Datenbus und die Schalterregister werden hochohmig geschaltet.

Die erste Ladungsimpulserzeugungsschaltung ist zum Empfang eines von außen zugeführten Bittaktes und zur Erzeugung von gegenüber einem Impuls des Synchronisiersignals verkürzten Ladeimpulsen nach Auftreten einer ansteigenden Flanke im Synchronisiersignal vorgesehen. Ein Ladeimpuls wird dem Vergleicher und der andere zur Ladung des ersten Zählers zugeführt. Der erste Zähler ist zur Taktung mit dem von außen zugeführten Bittakt und zum zyklischen Durchlauf seines Zählbereiches vorgesehen ist.

Im Störungsfall ist der zweite Zähler nach Empfang des Ausgangsimpulses vom Vergleicher zur Setzung auf einen Anfangs-Zählwert und zur Zählung der am höchstwertigsten Ausgang des ersten Zählers auftretenden Zählimpulse und nach Erreichen eines vorgegebenen Zählerstandes zur Freigabe des Ausgangs des Kanalzuordners vorgesehen.

Zur Weitergabe von Impulsen ist die aus einem UND-Gatter bestehende Steuerung vorgesehen, die das Sperrsignal, ein Ausgangssignal des zweiten Zählers und eines Ausgangssignal der zweiten Ladungsimpulserzeugerschaltung empfängt. Der Ausgang der Steuerung bildet den Ausgang des Kanalzuordners.

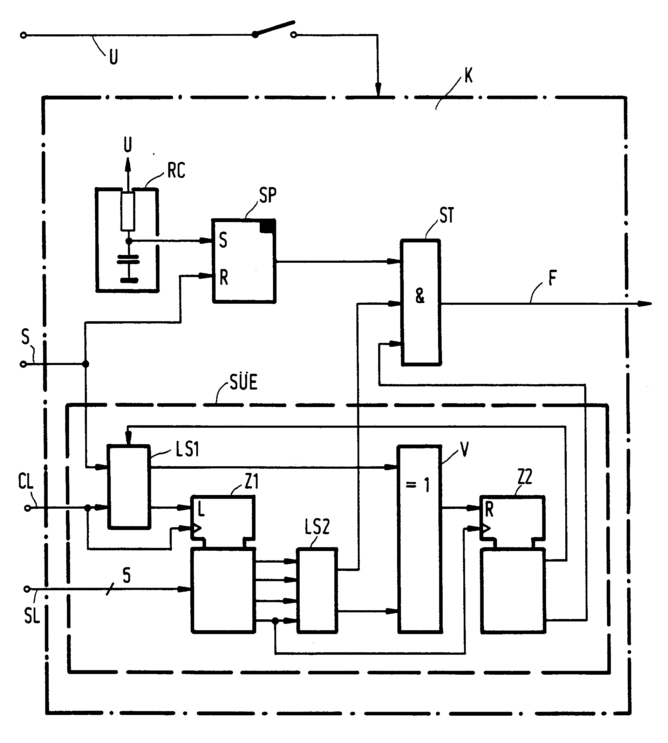

Die Erfindung wird im folgenden anhand einer in der Zeichnung dargestellten Ausführungsform näher beschrieben und erläutert.

Bei einer Anwendung des Kanalzuordners in einem PCM-30-Übertragungssystem liefert der Kanalzuordner in Abhängigkeit vom Systemtakt (2048 kHz), vom 500 Hz Rahmenkennungstakt und von einer 5-Bit-Steckplatzcodierung die Ansteuersignale für die Einzelkanalcodecs, um eine zeitrichtige Trennung von Sprachsignalen und der Kennzeicheninformation vornehmen zu können. Die Überwachung des Systemttaktes (Sendetakt mit 2048 kHz) erfolgt mittels des Rahmenkennungstaktes von beispielsweise 500 Hz. Die analogen Sprachsignale werden nach der Bandbegrenzung (f_{g}= 3,4 kHz) abgetastet (Abtastfrequenz 8 kHz) und in PAM-Signale umgewandelt. Durch eine nichtlineare Quantisierung und 8-Bit-Codierung (256 Amplitudenintervalle) nach der CCITT-"A-Law"-Kompanderkennlinie entstehen die digitalen PCM-Signale. Für die zeitliche Verschachtelung der codierten Sprachsignale (PCM-Signale) wird der in der CCITT-Empfehlung G 732 festgelegte 256-Bit-Pulsrahmen benutzt. Der Pulsrahmen ist in 32 Zeitabschnitte (Zeitkanäle) unterteilt, die die PCM-Signale der 30 Zeitkanäle wortweise (8-Bit-Wort) verschachtelt enthalten. Im Zeitkanal 0 wird abwechselnd das Synchronwort bzw. das Meldewort und im Zeitkanal 16 die Kennzeicheninformation übertragen. Entsprechend der Abtastfrequenz von 8 kHz beträgt die Zeitdauer eines Pulsrahmens 125 »s. Die Bitrate für jeden Zeitkanal ergibt sich zu 64 kbit/s und die Bitfolgefrequenz des PCM-30-Übertragungssystems liegt bei 2048 Mbit/s.

Beim Stecken der Steckbaugruppe soll sich der Kanalzuordner K nach außen hin neutral verhalten, d.h., über einen Ausgang F keine Impulse abgeben. Aus diesem Grunde liefert beim Anlegen einer Versorgungsspannung U an den Kanalzuordner K ein Speicher SP (hier ein Flip-Flop) ein Sperrsignal in Form einer logischen Null an einen ersten Eingang einer Steuerung ST (hier ein UND-Gatter mit drei Eingängen). Damit kann am Ausgang F des Kanalzuordners K - dieser Ausgang ist gleichzeitig der Ausgang der Steuerung ST - kein Impuls erscheinen. Durch die Kondensatorspannung des RC-Gliedes zum Zeitpunkt, zu dem die Versorgungsspannung U angelegt wird, wird der Speicher SP gesetzt, d.h., in einen Zustand versetzt, in dem er das erwähnte Sperrsignal für die Steuerung ST abgibt.

Sobald die durch die RC-Schaltung vorgegebene Verzögerungszeit abgelaufen ist und ein Synchronimpuls durch ein Synchronisiersignal S geliefert wird, wird der Speicher SP durch die Flanke dieses Synchronimpulses zurückgesetzt. Dadurch wird am ersten Eingang der Steuerung ST eine logische Eins angelegt. Mit dem Anlegen dieser logischen Eins ist eine erste Voraussetzung für die Öffnung der Steuerung ST erfüllt.

Weiterhin ist eine Synchronüberwachungsschaltung SÜE vorgesehen, die die Synchronzustandsüberwachung während des Betriebes vornimmt. Diese Überwachung erfolgt mit Hilfe des Synchronisiersignales S, einer Steckplatzcodierung SL (hier fünf parallele Bits) und eines Bittaktes Cl. Alle drei Signale werden dem Kanalzuordner von außen zugeführt. Das Synchronisiersignal S liegt an einer ersten Ladungsimpulserzeugungsschaltung LS1 an, ebenso der Bittakt Cl. Die erste Ladungsimpulserzeugungsschaltung LS1 reagiert auf die ansteigenden Flanken im Synchronisiersignal S und ist damit vom Impuls-Pausen-Verhältnis dieses Signales unabhängig. Durch einen Ladeimpuls, der aus einem Synchronimpuls des Synchronisiersignales S durch Impulsverkürzung abgeleitet ist und an einem unteren Ausgang der ersten Ladeimpulserzeugungsschaltung LS1 auftritt, wird ein erster Zähler Z1 zu Beginn des Synchronisiersignales S mit einer Zahl geladen, die der Steckplatzcodierung SL entspricht. Der Zähler Z1 wird mit dem Bittakt Cl getaktet und durchläuft seinen Zählbereich zyklisch.

Die Ausgänge des ersten Zählers Z1 sind mit einer zweiten Ladungsimpulserzeugungsschaltung LS2 verbunden. Ein erster Ausgang der zweiten Ladungsimpulserzeugungsschaltung LS2 ist mit einem Vergleicher V (hier ein EXKLUSIV-ODER-Gatter) verbunden, der die zeitliche Übereinstimmung der aus den Synchronimpulsen des Synchronisiersignales S durch Verkürzung abgeleiteten Impulse (oberer Ausgang der Schaltung LS1) mit den Impulsen am ersten Ausgang der zweiten Ladungsimpulsversorgungsschaltung LS2 überwacht. Bei fehlerfreiem Betrieb stimmen die Eingangsimpulse des Vergleichers V überein, so daß an seinem Ausgang kein Impuls auftritt.

Bei Nichtübereinstimmung wird der nichtsynchrone Zustand vorübergehend dadurch gespeichert, daß ein mit dem ersten Zähler Z1 verbundener zweiter Zähler Z2 durch einen Ausgangsimpuls des Vergleichers V gelöscht wird. Der Zähler Z2 wird im vorliegenden Beispiel von der höchstwertigsten Stufe des Zählers Z1 getaktet. Steht der Zähler Z2 auf dem Stand 1, so wird eine Information über diesen Zustand an die erste Ladungsimpulserzeugungsschaltung LS1 übertragen, die daraufhin die Abgabe von Ladeimpulsen an den Zähler Z1 unterbindet. Der Zähler Z1 läuft dann unabhängig vom Synchronisiersignal S. Während seines Laufes wird lediglich durch den Vergleicher V überprüft, ob durch die einmal erzwungene Synchronisation der synchrone Zustand weiterhin bestehen bleibt.

Hat der synchrone Zustand 16 Zähltakte für den Zähler Z2 bestanden - der Zähler Z2 ist also durch das Ausgangssignal des Vergleichers V während dieser Zeit niemals gelöscht worden - so wird der Zähler Z2 angehalten und durch ihn eine binäre Eins an einen zweiten Eingang der Steuerung ST gelegt, womit eine zweite und letzte Voraussetzung für die Öffnung der Steuerung ST erfüllt ist.

Die Steuerung ST ist nun für Impulse geöffnet, die an einem zweiten Ausgang der zweiten Ladungsimpulserzeugungsschaltung LS2 anliegen und einem dritten Eingang der Steuerung ST zugeführt werden. Die zeitliche Lage und die Länge dieser Impulse relativ zu den Synchronimpulsen des Synchronisiersignales S markieren die Zeitfenster, in denen Nutzdaten desjenigen Kanales auf einen systeminternen Datenbus gegeben werden können, der z.B. durch die Steckplatzcodierung SL gekennzeichnet ist.

## Patentansprüche

1. Schaltungsanordnung zur Sicherstellung der zeitrichtigen Abgabe von Sprachsignalen und Kennzeicheninformationen auf einen systeminternen Datenbus durch einen Kanalzuordner eines digitalen Nachrichten-Übertragungssystems, das periphere Kanaleinheiten zur getrennten Verarbeitung von Sprachsignalen und von Kennzeicheninformationen enthält,
dadurch gekennzeichnet,
daß eine RC-Schaltung (RC) und ein Speicher (SP) nach dem Anlegen der Versorgungsspannung zur Lieferung eines Sperrsignals über eine bestimmte Verzögerungszeit vorgesehen sind, und
daß eine Synchronzustands-Überwachungsschaltung (SÜE)
- eine erste Ladungsimpulserzeugungsschaltung (LS1) zur Ableitung von Ladeimpulsen aus einem von außen zugeführten Synchronisiersignal (S),
- einen ersten Zähler (Z1) zur zyklischen Zählung, dessen Zählwert nach Empfang eines Ladeimpulses der dem Kanalzuordner zugeordneten Steckplatzcodierung (SL) entspricht,
- einen Vergleicher (V) zur Erzeugung eines Ausgangsimpulses bei Nichtübereinstimmung eines Ladeimpulses mit einem von der zweiten Ladungsimpulserzeuguhgsschaltung (LS2) erzeugten Impulses nach einem Lauf des ersten Zählers (Z1) und
- einen zweiten Zähler (Z2) enthält, der nach Empfang des Ausgangsimpulses zur Unterbindung der Abgabe eines Ladeimpulses an den ersten Zähler (Z1) und der nach Zählung einer vorgegebenen Anzahl von vom ersten Zähler (Z1) gelieferten Takten und bei Nichtlieferung des Sperrsignals zur Freigabe eines von der zweiten Ladungsimpulserzeugungsschaltung erzeugten, von der Steckplatzcodierung (SL) abhängigen Impulses vorgesehen ist.

2. Schaltungsanordnung nach Anspruch 1,
dadurch gekennzeichnet,
daß die erste Ladungsimpulserzeugungsschaltung (LS1) zum Empfang eines von außen zugeführten Bittaktes (CL) und zur Erzeugung von gegenüber einem Impuls des Synchronisiersignals (S) verkürzten Ladeimpulsen nach Auftreten einer ansteigenden Flanke im Synchronisiersignal (S) vorgesehen ist.

3. Schaltungsanordnung nach Anspruch 1 oder 2,
dadurch gekennzeichnet,
daß der erste Zähler (Z1) zur Taktung mit dem von außen zugeführten Bittakt (CL) und zum zyklischen Durchlauf seines Zählbereiches vorgesehen ist.

4. Schaltungsanordnung nach Anspruch 1, 2 oder 3,
dadurch gekennzeichnet,
daß der zweite Zähler (Z2) nach Empfang des Ausgangsimpulses vom Vergleicher (V) zur Setzung auf einen Anfangs-Zählwert und zur Zählung der am höchstwertigsten Ausgang des ersten Zählers (Z1) auftretenden Zählimpulse und nach Erreichen eines vorgegebenen Zählerstandes zur Freigabe des Ausgangs des Kanalzuordners vorgesehen ist.

5. Schaltungsanordnung nach Anspruch 1, 2, 3 oder 4,
dadurch gekennzeichnet,
daß eine aus einem UND-Gatter bestehende Steuerung (ST) zum Empfang des Sperrsignals, eines Ausgangssignals des zweiten Zählers (Z2) und eines Ausgangssignals der zweiten Ladungsimpulserzeugerschaltung (LS2) vorgesehen ist und daß der Ausgang der Steuerung (ST) den Ausgang des Kanalzuordners (K) bildet.

## Claims

1. Circuit arrangement for ensuring by means of a channel allocator of a digital information transmission system that speech signals and identification codes are applied correctly with respect to time to a system-internal databus, which system comprises peripheral channel units for separately processing speech signals and identification codes, which circuit arrangement is characterized in that, the circuit arrangement comprises a RC-circuit (RC) and a store (SP), which, once the supply voltage has been fed, produce an inhibit signal over a given delay period, and in that a synchronization state supervising circuit (SUE) is provided, which includes
- a first charge pulse generating circuit (LS1) for deriving charge pulses from a synchronizing signal (S) applied from the exterior,
- a first cylcically counting counter (Z1) whose count corresponds to the plug-in position code (SL) assigned to the channel allocator after a charge pulse has been received,
- a comparator (V) for generating an output pulse when a charge pulse does not correspond to a pulse generated by the second charge pulse generating circuit (LS2) after the first counter (Z1) has made one run
- a second counter (Z2), which inhibits the supply of a charge pulse to the first counter (Z1) once the second counter has received the output pulse and releases a pulse once the second counter has counted a given number of clock signals supplied by the first counter (Z1) and if the inhibit signal is not produced, which pulse is generated by the second charge pulse generating circuit and depends on the plug-in position code (SL).

2. Circuit arrangement as claimed in Claim 1, characterized in that the first charge pulse generating circuit (LS1) receives a bit clock (CL) applied from the exterior and generates charge pulses shortened relative to a pulse of the synchronizing signal (S) once a rising edge has occurred in the synchronizing signal (S).

3. Circuit arrangement as claimed in Claim 1 or 2, characterized in that the first counter (Z1) is clocked with the bit clock (CL) and cyclically passes through its counter range.

4. Circuit arrangement as claimed in Claim 1, 2 or 3, characterized in that the second counter (Z2) is set to an initial count and counts the count pulses appearing at the most significant output of the first counter (Z1) and releases the output of the channel allocator once a given count has been reached.

5. Circuit arrangement as claimed in Claim 1, 2, 3 or 4, characterized in that a controller (ST) comprising an AND gate receives the inhibit signal, an output signal of the second counter (Z2) and an output signal of the second charge pulse generating circuit (LS2) and in that the output of the controller (ST) forms the output of the channel allocator (K).

## Revendications

1. Montage de circuit permettant de garantir la délivrance correcte dans le temps de signaux vocaux et d'informations d'identification sur un bus de données interne au système à travers un allocateur de canaux d'un système de transmission d'information numérique, qui contient des unités de canaux périphériques pour le traitement séparé des signaux vocaux et des informations d'identification, caractérisé en ce que :
il comporte un circuit RC (RC) et une mémoire (SP), qui ont pour but, après l'application de la tension d'alimentation, de délivrer un signal d'invalidation sur une période de temporisation déterminée, et
un circuit de surveillance de l'état synchrone (SÜE), qui contient :
- un premier circuit générateur d'impulsions de charge (LS1) pour extraire des impulsions de charge d'un signal de synchronisation (S) acheminé de l'extérieur;
- un premier compteur (Z1) pour un comptage cyclique, dont la valeur de comptage, après réception d'une impulsion de charge, correspond au codage de l'emplacement d'enfichage (SL) affecté à l'allocateur de canaux;
- un comparateur (V) pour produire une impulsion de sortie dans le cas de la non-coïncidence d'une impulsion de charge avec une impulsion produite par le deuxième circuit générateur d'impulsions de charge (LS2) après un parcours du premier compteur (Z1), et
- un deuxième compteur (Z2), qui a pour objet, après réception de l'impulsion de sortie, d'interrompre la délivrance d'une impulsion de charge au premier compteur (Z1) et, après comptage d'un nombre prédéterminé de rythmes délivrés par le premier compteur (Z1) et dans le cas de non-délivrance du signal d'invalidation, de valider une impulsion produite par le deuxième circuit générateur d'impulsions de charge en fonction du codage de l'emplacement d'enfichage (SL).

2. Montage de circuit selon la revendication 1, caractérisé en ce que le premier circuit générateur d'impulsions de charge (LS1) est prévu pour recevoir un rythme binaire (CL) acheminé de l'extérieur et pour produire des impulsions de charge raccourcies vis-à-vis d'une impulsion du signal de synchronisation (S) après l'apparition d'un flanc croissant dans le signal de synchronisation (S).

3. Montage de circuit selon la revendication 1 ou 2, caractérisé en ce que le premier compteur (Z1) est prévu pour se synchroniser sur le rythme binaire (C1) acheminé de l'extérieur et pour un parcours cyclique de sa plage de comptage.

4. Montage de circuit selon la revendication 1, 2 ou 3, caractérisé en ce que le deuxième compteur (Z2) est prévu pour, après réception de l'impulsion de sortie du comparateur (V), se régler sur une valeur de comptage de départ et compter les impulsions de comptage apparaissant à la sortie la plus significative du premier compteur (Z1) et, une fois atteint un état de comptage prédéterminé, valider la sortie de l'allocateur de canaux.

5. Montage de circuit selon la revendication 1, 2, 3 ou 4, caractérisé en ce qu'il est prévu une commande (ST) constituée d'une porte ET, qui reçoit le signal d'invalidation, un signal de sortie du deuxième compteur (Z2) et un signal de sortie du deuxième circuit générateur d'impulsions de charge (LS2) et en ce que la sortie de la commande (ST) constitue la sortie de l'allocateur de canaux (K).
